# EUROPÄISCHE PATENTANMELDUNG

(11) **EP 4 459 167 A1**
(43) Veröffentlichungstag der Anmeldung: **06.11.2024**
(21) Anmeldenummer: 24172429.3
(22) Anmeldetag: 25.04.2024
(51) Int. Cl.: F16L 37/084, F16L 37/098

(54) **SCHNELLKUPPLUNG FÜR FLUIDLEITUNGEN, SCHNELLKUPPLUNGSSYSTEM FÜR FLUIDLEITUNGEN SOWIE VERWENDUNG EINER SCHNELLKUPPLUNG**

(30) Priorität: 04.05.2023 DE 102023111601
(71) Anmelder: POLYTEC PLASTICS Germany GmbH & Co. KG, 49393 Lohne (DE)
(72) Erfinder: Sieverding, Dirk, 49393 Lohne (DE)
(74) Vertreter: dompatent von Kreisler Selting Werner - Partnerschaft von Patent- und Rechtsanwälten mbB

(57) **Zusammenfassung**

Schnellkupplung für Fluidleitungen mit einem Kupplungskörper (1);wobei der Kupplungskörper (1) eine Einsteckhülse (3) mit einem zylindrischen Aufnahmeraum (30) umfasst zur lösbaren Anbindung des Kupplungskörpers (1) an ein rohrförmiges Einsteckteil mit mindestens einer ersten Verrastungseinrichtung;wobei sich der zylindrische Aufnahmeraum (30) in axialer Richtung der Einsteckhülse (3) von einer Einstecköffnung (31) zu einem Aufnahmeraumgrund erstreckt;wobei die Einsteckhülse (3) eine Materialaussparung umfasst, welche sich um einen Umfangsabschnitt der zylindrischen Einsteckhülse (3) erstreckt zur Ausbildung eines Anordnungsraums (34), der sich von einem Anbindungsende (34a) zu einem oberen Ende (34b) erstreckt;wobei eine Verriegelungseinrichtung (5) sich bogenförmig entlang eines Umfangsabschnitts der Einsteckhülse (3) in dem Anordnungsraum (34) erstreckend und einteilig mit der Einsteckhülse (3) ausgebildet ist und mindestens eine an die mindestens eine erste Verrastungseinrichtung des Einsteckteilsangepasste zweite Verrastungseinrichtung umfasst; und wobei die Verriegelungseinrichtung (5) von einer unausgelenkten Verriegelungsposition, in welcher die mindestens eine zweite Verrastungseinrichtung mit der mindestens einen ersten Verrastungseinrichtung des Einsteckteils (3) zusammenwirkt und das Einsteckteil gegenüber der Einsteckhülse (3) zumindest in axialer Richtung festlegt, durch Auslenken der Verriegelungseinrichtung (5) in axialer und radialer Richtung in eine Freigabeposition überführbar ist, in welcher die mindestens eine zweite Verrastungseinrichtung die mindestens eine erste Verrastungseinrichtung freigibt und das Einsteckteil aus der Einsteckhülse (3) entfernbar ist.

## Beschreibung

Die vorliegende Erfindung betrifft eine Schnellkupplung für Fluidleitungen sowie ein Schnellkupplungssystem für Fluidleitungen umfassend eine erfindungsgemäße Schnellkupplung und ein rohrförmiges Einsteckteil mit mindestens einer ersten Verrastungseinrichtung als auch die Verwendung einer erfindungsgemäßen Schnellkupplung oder eines erfindungsgemäßen Schnellkupplungssystems für eine Fluidleitung eines Motors eines Kraftfahrzeugs.

Aus dem Stand der Technik sind bereits Schnellkupplungen für Fluidleitungen, insbesondere zum Einsatz in dem Kraftfahrzeugbereich, bekannt geworden. Nachteilig an den Kupplungen ist, dass diese in einer ersten Bauform mehrteilig zumindest zweiteilig ausgeführt werden. Hierbei wird ein fluidleitender Verbinderkörper der Schnellkupplung, welcher eine Muffe zur Aufnahme eines anzukoppelnden Einsteckteils umfasst, separat zu einer Verriegelungseinrichtung der Schnellkupplung ausgeführt. Die mehrteilige Ausführungsform weist den Nachteil auf, dass die mehreren Einzelteile separat, beispielsweise mittels Spritzgussverfahrens, hergestellt und darauffolgend maschinell und/oder händisch zu der mehrteiligen Baugruppe der Schnellkupplungen zusammengebaut werden müssen. Hieraus resultiert der Nachteil eines erhöhten Fertigungsaufwands als auch weiterhin die Gefahr eines fehlerhaften Zusammenbaus der Einzelteile der Schnellkupplung.

Aus dem Stand der Technik sind bereits auch einteilige Bauformen von Schnellkupplungen bekannt geworden, bei welchen die Verriegelungseinrichtung einteilig mit dem übrigen Kupplungskörper der Schnellkupplung gefertigt werden. Spezifisch ist aus der DE 10 20009 050 076 B3 eine einteilige Einsteckkupplung mit einer Verriegelungseinrichtung bekannt geworden, welche in Form eines sogenannten Sperrelements ausgebildet ist und welches im unbelasteten Zustand der Einsteckkupplung mittels eines Betätigungselementes radial bewegbar zwischen einer Verriegelungsposition und einer Freigabeposition ausgebildet ist. Im belasteten Zustand der Einsteckkupplung unter Anliegen von Innendruck wird das Sperrelement axial ausgelenkt und kommt gegen eine Schrägfläche zum Anliegen, wodurch im belasteten Zustand ein radiales Auslenken und damit ein unbeabsichtigtes Lösen des Sperrelementes verhindert wird. Die aus dem Stand der Technik bekannten Lösungen weisen jedoch den Nachteil auf, dass die realisierten Sicherungslösungen an den Verriegelungseinrichtungen einen nur unzureichenden Schutz gegen ein unbeabsichtigtes Lösen der Schnellkupplung im unbelasteten und damit im axial unausgelenkten Zustand des Sperrelementes bieten. So kann im unbelasteten Zustand der Einsteckkupplung das Sperrelement durch radiales Aufweiten in die Freigabeposition überführt werden zur Lösung der Verriegelung. Bei dem Lösen der Verriegelungseinrichtung besteht bei der Ausführungsform gemäß DE 10 2009 050 076 B3 weiterhin die Gefahr einer Überbeanspruchung der Verriegelungseinrichtung der Schnellkupplung aufgrund des Umstandes, dass das Maß der radialen Aufweitung oder Auslenkung der Verriegelungseinrichtung nicht begrenzt wird .

Ausgehend von den vorbezeichneten Nachteilen des Standes der Technik liegt der vorliegenden Erfindung die Aufgabe zugrunde, eine verbesserte Schnellkupplung sowie ein verbessertes Schnellkupplungssystem für Fluidleitungen bereit zu stellen, welche die Montage und Demontage von Fluidleitungen vereinfacht sowie darüber hinaus eine erhöhte Sicherheit gegen unbeabsichtigtes Lösen der Schnellkupplungsverbindung gegenüber der Fluidleitung erreicht.

Die Aufgabe wird gelöst gemäß einem ersten Aspekt durch eine erfindungsgemäße Schnellkupplung für Fluidleitungen. Die Schnellkupplung für Fluidleitungen umfasst einen Kupplungskörper, wobei der Kupplungskörper eine Einsteckhülse mit einem zylindrischen Aufnahmeraum umfasst zur lösbaren Anbindung des Kupplungskörpers an ein rohrförmiges Einsteckteil mit mindestens einer ersten Verrastungseinrichtung.

Als Anbindung des Kupplungskörpers mit dem rohrförmigen Einsteckteil soll im Rahmen der vorliegenden Erfindung die Etablierung einer fluiddichten kommunizierenden Verbindung zwischen der Schnellkupplung und dem rohrförmigen Einsteckteil verstanden werden. Die Schnellkupplung dient dabei der Übertragung von durch ein Einsteckteil zu- bzw. abgeführten Fluiden, wie insbesondere flüssigen und/oder gasförmigen Stoffen. Die erfindungsgemäßen Schnellkupplungen können insbesondere im Bereich von Regenerierleitungen, Entlüftungsleitungen und/oder Treibleitungen eines Kraftfahrzeuges zur An- und/oder Verbindung von Fluidleitungen Verwendung finden

Der zylindrische Aufnahmeraum der Einsteckhülse erstreckt sich in axialer Richtung der Einsteckhülse von einer Einstecköffnung zu einem Aufnahmeraumgrund. Die Einsteckhülse kann somit im Wesentlichen durch einen kreiszylindrischen Aufnahmeraum in dem Kupplungskörper ausgebildet werden, der zylindrische Aufnahmeraum kann jedoch auch von der Kreisform abweichende Querschnittsformen, wie insbesondere ovalisierte Formen, aufweisen.

Der Aufnahmeraumgrund weist eine Öffnung zur Durchführung der über das rohrförmige Einsteckteil zu- und/oder abgeführten Fluide auf. Die Öffnung im Aufnahmegrund weist bevorzugt die Größe und Abmessungen der Öffnung des rohrförmigen Einsteckteils auf und ist bevorzugt fluchtend mit dieser angeordnet.

Die Einsteckhülse weist eine Materialaussparung auf, welche sich um einen Umfangsabschnitt der zylindrischen Einsteckhülse erstreckt zur Ausbildung eines Anordnungsraums, welcher sich von einem Anbindungsende zu einem oberen Ende erstreckt. Die in der Einsteckhülse gebildete Materialaussparung bildet dabei einen Anordnungsraum, welcher die Form eines Kreisringabschnitts umfassen kann. Die Materialaussparung bildet dabei eine Art fensterförmige Aussparung in der Einsteckhülse aus, welche die den Kupplungskörper umgebende Atmosphäre mit dem Aufnahmeraum der Einsteckhülse verbindet.

Weiterhin umfasst die erfindungsgemäße Schnellkupplung eine Verriegelungseinrichtung, welche sich bogenförmig entlang eines Umfangsabschnitts der Einsteckhülse in dem Anordnungsraum erstreckt und einteilig mit der Einsteckhülse ausgebildet ist und mindestens eine an die mindestens eine erste Verrastungseinrichtung des Einsteckteils angepasste zweite Verrastungseinrichtung umfasst. Die Verriegelungseinrichtung kann von einer unausgelenkten Verriegelungsposition, in welcher die mindestens eine zweite Verrastungseinrichtung mit der mindestens einen ersten Verrastungseinrichtung des Einsteckteils zusammenwirkt und das Einsteckteil gegenüber der Einsteckhülse zumindest in axialer Richtung festlegt, durch Auslenken der Verriegelungseinrichtung in axialer und radialer Richtung in eine ausgelenkte Freigabeposition überführbar sein, in welcher die mindestens eine zweite Verrastungseinrichtung die mindestens eine erste Verrastungseinrichtung freigibt und das Einsteckteil aus der Einsteckhülse entfernbar ist. Die Auslenkung von der Verriegelungsposition in die Freigabeposition erfolgt vorzugsweise durch elastische Verformung des Materials der Verriegelungseinrichtung.

Die erfindungsgemäße Schnellkupplung für Fluidleitungen weist den Vorteil auf, dass der gesamte Kupplungskörper umfassend die Einsteckhülse sowie insbesondere die Verriegelungseinrichtung einstückig ausgeführt ist und beispielsweise bevorzugt als Spritzgussteil hergestellt werden kann, wodurch insbesondere die Erstellungsaufwände deutlich reduziert werden können und die Gefahr eines etwaigen fehlerhaften Zusammenbaus der Einzelteile verhindert wird.

Gemäß der Erfindung kann es vorgesehen sein, dass der Kupplungskörper zum Verbinden von mindestens zwei fluidführenden Einrichtungen ausgebildet ist. Hierzu kann zumindest eine erste fluidführende Einrichtung über die Einsteckhülse an den Kupplungskörper angebunden werden, wobei die erste fluidführende Einrichtung ein rohrförmiges Einsteckteil mit mindestens einer ersten Verrastungseinrichtung umfasst zur Anbindung der ersten fluidführenden Einrichtung an den Kupplungskörper über die Einsteckhülse. Zur Anbindung von mindestens einer zweiten fluidführenden Einrichtung kann der Kupplungskörper über mindestens eine zweite Einrichtung zur Anbindung von fluidführenden Einrichtungen verfügen. Diese mindestens eine zweite Einrichtung kann wiederum als Einsteckhülse ausgebildet werden. Erfindungsgemäß kann die mindestens eine zweite Anbindungseinrichtung jedoch auch über zu der Einsteckhülse abweichende Anbindungseinrichtungen verfügen. Die mindestens eine zweite Anbindungseinrichtung kann beispielsweise zur Anbindung einer Schlauchleitung an einem der Einsteckhülse gegenüberliegenden Ende ein Zapfenprofil zum Aufschießen bzw. Aufpressen einer Schlauchleitung, insbesondere einer Polyamid umfassenden Schlauchleitung, umfassen.

Im Rahmen der vorliegenden Erfindung soll der Begriff der fluidführenden Einrichtungen derart verstanden werden, dass dieser beispielsweise Rohrleitungen, Schläuche, Fluideinlässe und -auslässe, sowie sonstige fluidführende Teile umfasst, an welche sich die erfindungsgemäße Schnellkupplung zur Etablierung einer fluidführenden Verbindung anbinden lässt. Über den Kupplungskörper wird dann eine fluidführende Verbindung zwischen dem Aufnahmeraumgrund und der mindestens einen zweiten Anbindungseinrichtung ausgebildet.

Weiterhin vorteilhaft an der erfindungsgemäßen Schnellkupplung ist, dass die Verriegelungseinrichtung lediglich durch gleichzeitiges Auslenken in axialer sowie in radialer Richtung in eine Freigabeposition überführbar ist, wodurch eine erhöhte Sicherheit gegen ein unbeabsichtigtes Lösen der erfindungsgemäßen Schnellkupplung erfindungsgemäß erreicht wird. Die erfindungsgemäße Schnellkupplung erfordert somit zum Lösen der Anbindung, dass die Verriegelungseinrichtung in eine spezifische Richtung ausgelenkt wird.

Die Verriegelungseinrichtung kann insbesondere als Verriegelungsarm ausgebildet werden, wobei sich der Verriegelungsarm von einem ersten Anbindungsende bogenförmig entlang des Aufnahmeraums zu einem gegenüberliegenden zweiten freien Ende erstreckt, wobei das erste Anbindungsende in Umfangsrichtung der Einsteckhülse angeformt ist. Die Verriegelungseinrichtung kann in axialer Richtung in Richtung der Einstecköffnung beabstandet zu der Einsteckhülse ausgebildet werden zur Ausbildung eines ersten Spaltes.

Die Einsteckhülse kann im Bereich des oberen Endes eine erste Materialausklinkung entlang eines ersten Umfangsabschnittes zur Erweiterung des ersten Spalts in axialer Richtung umfassen und die Verriegelungseinrichtung einen in der unausgelenkten Verriegelungsposition in die erste Materialausklinkung axial vorstehenden ersten Vorsprung umfassen zur Ausbildung eines ersten Anschlagelementes, welches die radiale Auslenkung der Verriegelungseinrichtung in der unausgelenkten Verriegelungsposition begrenzt. Die erste Materialausklinkung erweitert den Anordnungsraum in axialer Richtung und in Richtung der Einsteckhülse.

Der erste Vorsprung greift in der unausgelenkten Verriegelungsposition in den erweiterten Spaltraumbereich der ersten Materialausklinkung ein und bildet in Umfangsrichtung eine Hinterschneidung relativ zu der Einsteckhülse, verläuft jedoch beabstandet zu der Wandung der Einsteckhülse. Durch die Ausbildung des ersten Vorsprungs, welcher in die erste Materialausklinkung eingreift, wird eine Sicherungseinrichtung gegen ein unbeabsichtigtes radiales Auslenken bzw. Aufweiten der Verriegelungseinrichtung in der Verriegelungsposition ausgebildet, um somit ein unbeabsichtigtes Auslenken der Verriegelungseinrichtung von der Verriegelungsposition in die Freigabeposition zu verhindern.

Weiterhin kann sich die Verriegelungseinrichtung bei Auftreten einer axialen Zugkraft in dem Einsteckteil aus der Verriegelungsposition in Richtung der Einstecköffnung axial beispielsweise bei Auftreten eines erhöhten Drucks in der Fluidleitung der Einstecköffnung auslenken, wobei der erste Vorsprung tiefer in die erste Materialausklinkung eingreift, bis dieser zur Anlage kommt und durch den Formschluss des ersten Vorsprungs mit der ersten Ausklinkung eine weitere Sicherung gegen ein unbeabsichtigtes Lösen der Verbindung realisiert wird.

Es kann vorgesehen werden, dass die Verriegelungseinrichtung in axialer Richtung in Richtung des Aufnahmeraumgrunds beabstandet zu der Einsteckhülse ausgebildet ist. Durch die axiale Beabstandung in Richtung des Aufnahmegrunds kann die Verriegelungseinrichtung axial in diese Richtung verbessert in die vorbezeichnete Richtung elastisch ausgelenkt werden, wodurch der erste Vorsprung aus der ersten Ausklinkung axial herausgeführt wird und in diese nicht mehr eingreift, wodurch dann die Verriegelungseinrichtung radial unbegrenzt ausgelenkt werden kann.

Die Einsteckhülse kann im Bereich des zweiten Spalts eine zweite Materialausklinkung entlang eines zweiten Umfangsabschnitts zur Erweiterung des zweiten Spalts in axialer Richtung umfassen und die Verriegelungseinrichtung einen in der Freigabeposition in die zweite Materialausklinkung vorstehenden zweiten Vorsprung umfassen zur Ausbildung eines zweiten Anschlagelements, welches die radiale Auslenkung der Verriegelungseinrichtung in der ausgelenkten Freigabeposition begrenzt.

Der zweite Vorsprung greift in der ersten unausgelenkten Verriegelungsposition nicht in die zweite Materialausklinkung ein, erst wenn die Verriegelungseinrichtung in die Freigabeposition axial ausgelenkt wird, greift der zweite Vorsprung in die zweite Materialausklinkung ein und bildet ein zweites Anschlagelement. Das zweite Anschlagelement dient dazu, die Auslenkung der Verriegelungseinrichtung in axialer Richtung auf eine definierte radiale Auslenkung zu beschränken, um ein zu weites Aufweiten der Verriegelungseinrichtung in radialer Richtung zu verhindern. Durch die Begrenzung der radialen Auslenkung wird eine plastische Verformung oder eine Schädigung der Verriegelungseinrichtung durch zu starkes radiales Aufweiten bzw. Auslenken verhindert.

Die erste Ausklinkung verläuft bevorzugt ausgehend von dem oberen Ende des Anordnungsraums in Umfangsrichtung entlang eines zweiten Umfangsabschnitts. Der erste Umfangsabschnitt ist kürzer als der zweite Umfangsabschnitt der zweiten Ausklinkung gewählt.

Die Länge des ersten Umfangsabschnitts in Umfangsrichtung der Materialausklinkung ist so gewählt, dass die Verriegelungseinrichtung zwar in einem geringen Maß radial ausgelenkt werden kann, jedoch die radiale Auslenkung so begrenzt ist, dass die Verrastung zwischen dem Einsteckteil und der Verriegelungseinrichtung nicht gelöst wird bzw. sich die Verrastungseinrichtung immer noch im Eingriff befinden. Der zweite Umfangsabschnitt der zweiten Materialausklinkung ist in Umfangsrichtung gesehen länger ausgebildet als der erste Umfangsabschnitt der ersten Materialausklinkung, um die Freigabe der Verrastungseinrichtungen durch radiales Auslenken der Verriegelungseinrichtung zu ermöglichen. Erfindungsgemäß wird somit erst ein radiales Aufweiten der Verriegelungseinrichtung zur Freigabe der Einsteckhülse ermöglicht, wenn diese gleichzeitig axial in Richtung des Aufnahmegrundes ausgelenkt wird, so dass der erste Vorsprung nicht mehr im Eingriff der ersten Materialaussparung ist und der zweite Vorsprung in die zweite Materialaussparung in Eingriff gelangt.

Das erste und/oder zweite Anschlagelement werden bevorzugt durch eine seitliche Stufe bzw. einen seitlichen Absatz der Materialausklinkung gebildet.

Die Verriegelungseinrichtung kann mindestens eine zweite Verrastungseinrichtung umfassen, welche in der unausgelenkten Verriegelungsposition in den zylindrischen Aufnahmeraum ragt, wobei die mindestens eine zweite Verrastungseinrichtung eine abgeschrägte, mit der mindestens einen ersten Verrastungseinrichtung des Einsteckteils zusammenwirkende, Anstoßfläche umfasst.

Die Verriegelungseinrichtung kann weiterhin zwei in Umfangsrichtung beabstandete und in radialer Richtung der Einsteckhülse dem Aufnahmeraum abgewandte Betätigungselemente umfassen. Die Betätigungselemente können abstehend von dem Kupplungskörper ausgebildet werden.

Ein erstes Betätigungselement kann im Bereich des Anbindungsendes ausgebildet werden und eine erste Betätigungsfläche umfassen, welche in axialer Richtung verläuft. Ein zweites Betätigungselement kann in Richtung des freien Endes der Verriegelungseinrichtung beabstandet zu dem ersten Betätigungselement angeordnet werden und wobei das zweite Betätigungselement eine in axialer Richtung geneigte zweite Betätigungsfläche aufweisen kann. Die erste und zweite Betätigungsfläche sind auf in Umgangsrichtung einander abgewandten Seiten der Betätigungselemente ausgebildet.

In dem Aufnahmeraum zwischen dem Aufnahmegrund und der Verriegelungseinrichtung kann ein Dichtungselement angeordnet werden, wobei bevorzugt im Bereich der Einsteckhülse mindestens eine Materialaussparung zur Aufnahme eines Vorsprungs des Dichtungselements ausgebildet werden kann.

Die Materialaussparung kann bevorzugt in Form eines Durchbruchs bzw. Fensters im Bereich der Einsteckhülse zur Identifizierung einer korrekten Installation des Dichtungselements ausgebildet werden.

Durch die Aufnahme des Dichtungselements in der Materialaussparung wird weiterhin ein Verrutschen oder Herausziehen des Dichtungselements aus der Einsteckhülse verhindert und das Dichtungselement in einer definierten Position gegenüber der Einsteckhülse fixiert.

Die Verriegelungseinrichtung kann mindestens eine entlang eines Teilabschnitts in Umfangsrichtung verlaufende Versteifungsrippe umfassen. Durch die Vorsehung von mindestens einer Versteifungsrippe können unterschiedliche Biegesteifigkeiten im Bereich der Verriegelungseinrichtung ausgebildet werden

Der Kupplungskörper kann eine Detektionseinrichtung umfassen, welche bevorzugt zwischen der Verriegelungseinrichtung und der Einsteckhülse angeformt und derart ausgebildet ist, dass die Detektionseinrichtung bei dem Auslenken der Verriegelungseinrichtung von der unausgelenkten Verriegelungsposition in die ausgelenkte Freigabeposition bricht und/oder von der Verriegelungseinrichtung oder der Einsteckhülse abbricht.

Besonders bevorzugt kann die Detektionseinrichtung als Filmscharnier ausgebildet werden, welches zwischen der Verriegelungseinrichtung und der Einsteckhülse als dünnwandige Brücke, wie beispielsweise als Materialfilm, ausgebildet ist.

Erfindungsgemäß kann es weiterhin vorgesehen werden, dass der Kupplungskörper zusätzlich zu der Einsteckhülse mindestens eine weitere Anbindungseinrichtung für fluidführende Einrichtungen umfasst, wobei im Kupplungskörper mindestens eine Verbindungsleitung zur Ausbildung einer fluidführenden Verbindung zwischen der Einsteckhülse und der mindestens einen weiteren Anbindungseinrichtung ausgebildet ist.

Der Kupplungskörper kann weiterhin mindestens ein Rückschlagventil umfassen, wobei das Rückschlagventil bevorzugt in einer Verbindungsleitung angeordnet werden kann.

Das Rückschlagventil kann beispielsweise als ein elastomeres Rückschlagventil oder als Metallplättchen ausgebildet werden. Gemäß einem zweiten Aspekt kann erfindungsgemäß ein Schnellkupplungssystem für Fluidleitungen vorgesehen werden, welches eine Schnellkupplung gemäß dem ersten Aspekt der Erfindung sowie ein rohrförmiges Einsteckteil mit mindestens einer ersten Verrastungseinrichtung umfasst.

Die erste und zweite Verrastungseinrichtung können beispielsweise als aneinander angepasste Rastnut und Rastvorsprung ausgebildet werden. Besonders bevorzugt kann der Rastvorsprung als umlaufender Rastvorsprung ausgebildet werden.

Erfindungsgemäß kann es jedoch auch vorgesehen werden, dass mindestens ein Rastvorsprung sich lediglich entlang eines Teilbereiches, insbesondere entlang eines Teilumfangsbereiches, des rohrförmigen Einsteckteils erstreckt, wobei das Einsteckteil bevorzugt gegenüber der Einsteckhülse durch eine Vorsprung-Nut-Kombination gegen ein unbeabsichtigtes Verdrehen gesichert ist.

Weiterhin kann die Verwendung einer erfindungsgemäßen Schnellkupplung oder eines erfindungsgemäßen Schnellkupplungssystems für eine Fluidleitung eines Motors eines Kraftfahrzeugs zur Anbindung einer Entlüftungsleitung, Regenerierleitung und/oder Treibleitung genutzt werden.

Im nachfolgenden werden unter Bezugnahme auf die beigefügten Figuren beispielhafte Ausführungsformen einer erfindungsgemäßen Schnellkupplung sowie eines entsprechenden erfindungsgemäßen Schnellkupplungssystems für Fluidleitungen umfassend bevorzugte Ausführungsmerkmale der erfindungsgemäßen Schnellkupplung erläutert.

Es zeigen:
- Fig. 1A: eine Ansicht einer beispielhaften erfindungsgemäßen Schnellkupplung für Fluidleitungen mit einer Verriegelungseinrichtung in unausgelenkter Verriegelungsposition;
- Fig. 1B: eine erste Schnittansicht durch die Schnellkupplung entlang der Schnittachse BB gemäß Fig. 1A; sowie
- Fig. 1C: eine zweite Schnittansicht durch die Schnellkupplung entlang der Schnittachse CC gemäß Fig. 1A;
- Fig. 2A: die beispielhafte Schnellkupplung gem. Fign. 1, wobei die Verriegelungseinrichtung in radial aufgeweiteter Position dargestellt ist;
- Fig. 2B: die beispielhafte Schnellkupplung gem. Fign. 1, wobei die Verriegelungseinrichtung in radial und axial ausgelenkter Position in der Freigabeposition dargestellt ist;
- Fig. 3A: die beispielhafte Schnellkupplung zusammen mit einem daran angepassten Dichtungselement im zerlegten Zustand;
- Fig. 3B: die beispielhafte Schnellkupplung gemäß Fig. 3A mit dem Dichtungselement im zusammengebauten Zustand;
- Fig. 4A: eine schematische Schnittansicht durch die beispielhafte Schnellkupplung mit einem daran angepassten Einsteckteil im unverbundenen Zustand; sowie
- Fig. 4B: eine schematische Schnittansicht durch die beispielhafte Schnellkupplung mit einem daran angepassten Einsteckteil in verbundener angekoppelter Position.

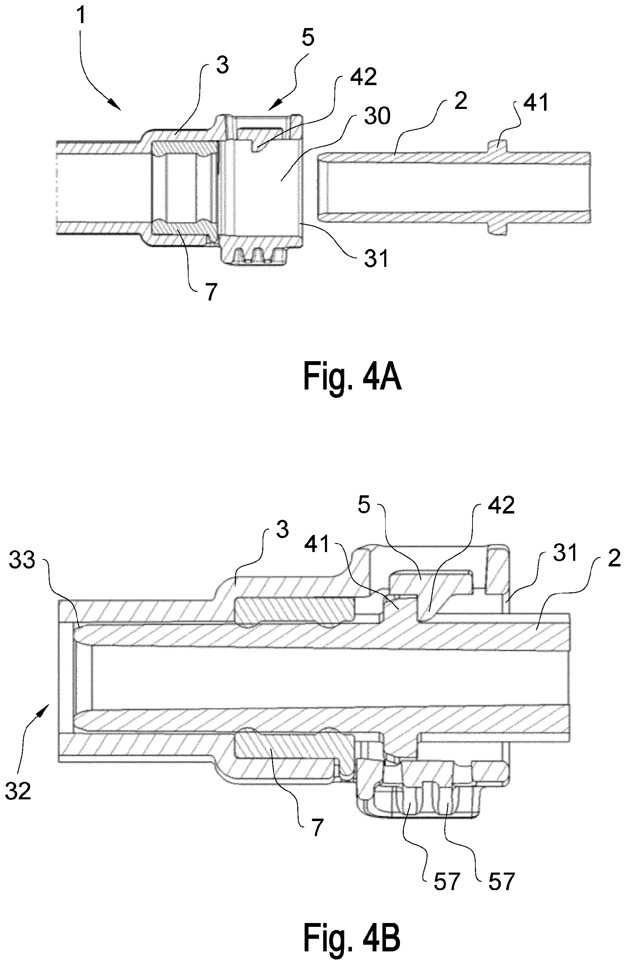

Die nachfolgenden Figuren zeigen eine gemeinsame beispielhafte Ausführungsform in unterschiedlichen Ansichten zur Verdeutlichung der realisierten Merkmale. Einige der realisierten Merkmale stellen lediglich optionale und bevorzugte Merkmale der erfindungsgemäßen Schnellkupplung dar, welche nicht zwingend erfindungsgemäß vorgesehen sind. Den Figuren 4 ist ein erfindungsgemäßes Schnellkupplungssystem zu entnehmen.

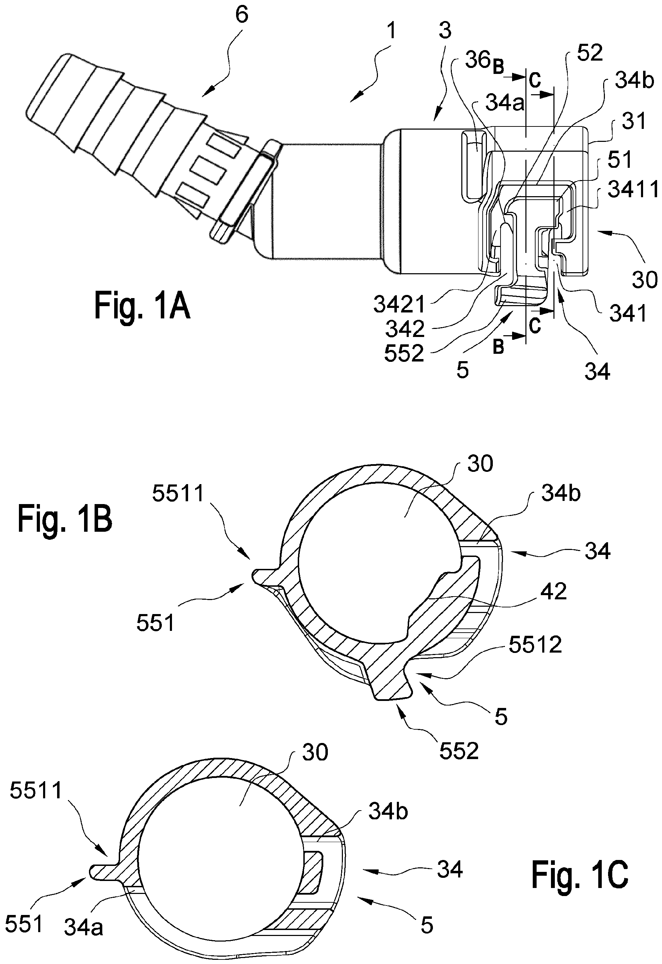

Die Fig. 1A zeigt zunächst eine erste schematische Ansicht der beispielhaften Ausführungsform der erfindungsgemäßen Schnellkupplung für Fluidleitungen umfassend einen Kupplungskörper 1. Der Kupplungskörper 1 weist zunächst eine Einsteckhülse 3 mit einem zylindrischen Aufnahmeraum 30 auf. Der Aufnahmeraum 30 dient zur lösbaren Anbindung des Kupplungskörpers 1 an ein rohrförmiges Einsteckteil 2 mit mindestens einer Verrastungseinrichtung 41, wobei das rohrförmige Einsteckteil 2 zur Übersichtlichkeit in den Figuren 1-3 nicht dargestellt ist. Der zylindrische Aufnahmeraum 30 erstreckt sich in axialer Richtung der Einsteckhülse 3 von einer Einstecköffnung 31 zu einem gegenüberliegenden Aufnahmeraumgrund 33. Die Einsteckhülse 3 umfasst eine Materialaussparung, welche sich um einen Umfangsabschnitt der zylindrischen Einsteckhülse 3 erstreckt zur Ausbildung eines Anordnungsraums 34, der sich von einem Anbindungsende 34A zu einem oberen Ende 34B erstreckt. Die Materialaussparung ist dabei fensterförmig in der Einsteckhülse 3 ausgebildet. Eine Verriegelungseinrichtung 5 erstreckt sich bogenförmig entlang eines Umfangsabschnitts der Einsteckhülse 3 und ist in dem Anordnungsraum 34 erstreckend ausgebildet, wobei die Verriegelungseinrichtung 5 mit der Einsteckhülse 3 einteilig ausgebildet ist und die Verriegelungseinrichtung 5 mindestens eine an die mindestens eine erste Verrastungseinrichtung 41 des Einsteckteils 2 angepasste zweite Verrastungseinrichtung 42 umfasst.

Die Verriegelungseinrichtung 5 ist in den Figuren 1 sowie 3 und 4 in einer unausgelenkten Verriegelungsposition dargestellt, in welcher die mindestens eine zweite Verrastungseinrichtung 42 mit der mindestens einen ersten Verrastungseinrichtung 41 des Einsteckteils 2 zusammenwirkt und das Einsteckteil 2 gegenüber der Einsteckhülse 3 zumindest in axialer Richtung festlegt. Die Verriegelungseinrichtung 5 kann durch Auslenken der Verriegelungseinrichtung 5 in axiale und gleichzeitig radiale Richtung in eine Freigabeposition überführt werden, in welcher die mindestens eine zweite Verrastungseinrichtung 42 die mindestens eine erste Verrastungseinrichtung 41 freigibt und das Einsteckteil 2 aus der Einsteckhülse 3 entfernbar ist.

Wie dies in den Figuren dargestellt ist, kann die Verriegelungseinrichtung 5 als Verriegelungsarm ausgebildet werden, wobei sich der Verriegelungsarm von dem ersten Anbindungsende 34A bogenförmig entlang des Aufnahmeraums 34 zu einem zweiten freien Ende 34b erstreckt, wobei das erste Anbindungsende 34a in Umfangsrichtung an der Einsteckhülse 3 angeformt ist.

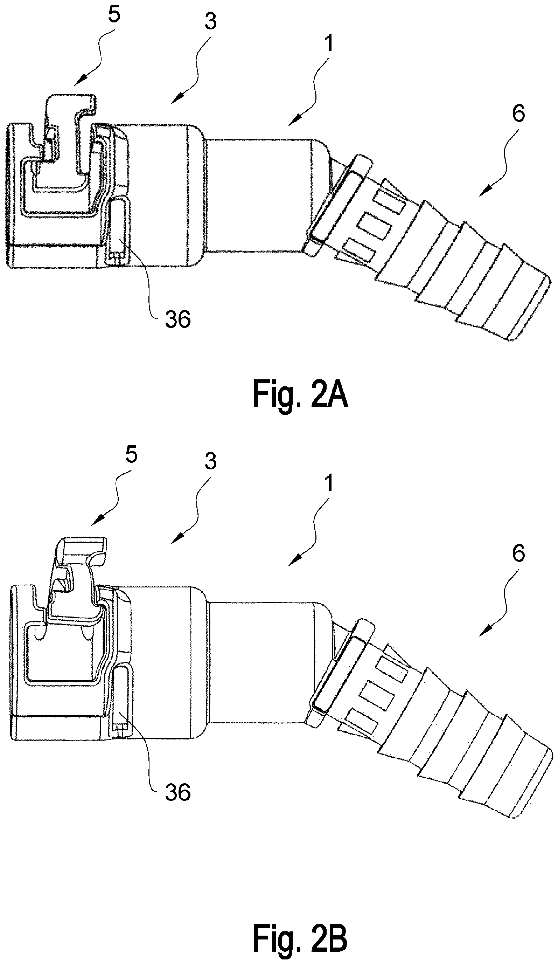

Die Verriegelungseinrichtung 5 kann in axialer Richtung in Richtung der Einstecköffnung 31 beabstandet zu der Einsteckhülse 3 ausgeführt werden zur Ausbildung eines ersten axialen Spalts 341. Weiterhin kann es vorgesehen werden, dass die Einsteckhülse 3 im Bereich des oberen Endes 34b eine erste Materialausklinkung 3411 entlang eines ersten Umfangsabschnitts zur Erweiterung des ersten Spalts 341 in axialer Richtung aufweist und die Verriegelungseinrichtung 5 einen in der unausgelenkten Verriegelungsposition in die erste Materialausklinkung 3411 axial vorstehenden ersten Vorsprung 51 umfasst zur Ausbildung eines ersten Anschlagselements, welches die radiale Aufweitung der Verriegelungseinrichtung 5 in der unausgelenkten Verriegelungsposition begrenzt, wie dies der Fig. 2A entnehmbar ist.

In der Fig. 2B ist die Verriegelungseinrichtung 5 in der Freigabeposition dargestellt, wobei die Verriegelungseinrichtung, wie aus der Fig. 2B deutlich im Vergleich mit der Fig. 1A entnehmbar ist, in radialer und gleichzeitig axialer Richtung ausgelenkt wurde, um die in der Fig. 2B dargestellte Freigabeposition zu erreichen. Wie dies weiterhin dem Vergleich mit der Fig. 2A entnehmbar ist, reicht ein einfaches radiales Aufweiten bzw. radiales Auslenken der Verriegelungseinrichtung 5 nicht aus, um die Freigabeposition gemäß Fig. 2B zu erreichen. Vielmehr ist gleichzeitig eine kombinierte Auslenkung in radialer und axialer Richtung erforderlich, um eben die Anschlagelemente der Verriegelungseinrichtung 5 zu überwinden und damit die Verriegelungseinrichtung 5 in die Freigabeposition zu überführen.

Die Verriegelungseinrichtung 5 kann weiterhin in axialer Richtung in Richtung des Aufnahmegrunds 33 beabstandet zu der Einsteckhülse 3 ausgebildet werden zur Ausbildung eines zweiten axialen Spalts 342. Die Einsteckhülse 3 kann im Bereich des zweiten Spalts 342, so wie in den Figuren dargestellt, eine zweite Materialausklinkung 3421 entlang eines zweiten Umfangsabschnitts zur Erweiterung des zweiten Spalts 342 in axialer Richtung umfassen. Die Verriegelungseinrichtung 5 kann einen in der Freigabeposition in die zweite Materialausklinkung 3421 vorstehenden zweiten Vorsprung 52 umfassen zur Ausbildung eines zweiten Anschlagelementes, welches die radiale Auslenkung der Verriegelungseinrichtung 5 in der ausgelenkten Freigabeposition begrenzt.

Die Verriegelungseinrichtung 5 kann mindestens eine zweite Verrastungseinrichtung 42 umfassen, welche in der unausgelenkten Verriegelungsposition in den zylindrischen Aufnahmeraum 30 der Einsteckhülse 3 ragt, wobei die mindestens eine zweite Verrastungseinrichtung 42 eine abgeschrägte, mit der mindestens einen ersten Verrastungseinrichtung 41 des Einsteckteils zusammenwirkende, Anstoßfläche umfasst, so wie dies in den Figuren 4A und 4B dargestellt ist.

Die Verriegelungseinrichtung 5 kann zwei in Umfangsrichtung beabstandete und in radialer Richtung abstehende, dem Aufnahmeraum 30 der Einsteckhülse 3 abgewandte, Betätigungselemente 55 umfassen, wobei ein erstes Betätigungselement 551 im Bereich des Anbindungsendes 34a und eine Betätigungsfläche 5511 des ersten Betätigungselements in axialer Richtung verläuft und wobei ein zweites Betätigungselement 552 in Richtung des freien Endes 34b der Verriegelungseinrichtung beabstandet zu dem ersten Betätigungselement 551 angeordnet ist. Das zweite Betätigungselement 552 kann eine in axialer Richtung geneigte Betätigungsfläche 5521 umfassen.

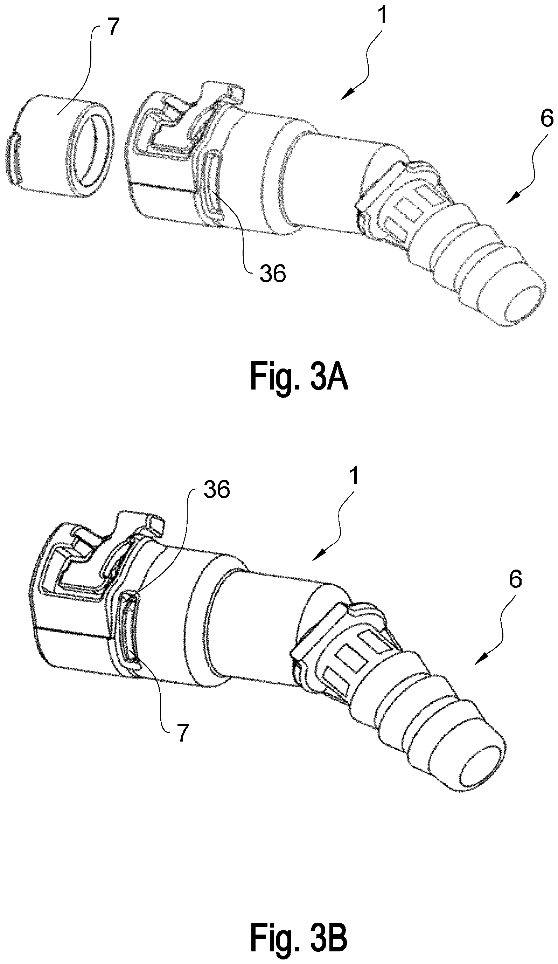

In dem Aufnahmeraum 30 kann zwischen dem Aufnahmeraumgrund 33 und der Verriegelungseinrichtung 5 ein Dichtungselement 7 angeordnet werden, wie dies in den Fign. 3 und 4 dargestellt ist. Den Figuren 4A und 4B ist entnehmbar, wie das Dichtungselement 7 zwischen dem Aufnahmeraumgrund 33 und der Verriegelungseinrichtung 5 angeordnet werden kann, wobei in den dargestellten bevorzugten Ausführungsformen mindestens eine Materialaussparung 36 zur Aufnahme eines Vorsprungs des Dichtungselements 7 ausgebildet ist.

Die Verriegelungseinrichtung 5 kann mindestens eine entlang eines Teilabschnitts in Umfangsrichtung verlaufende Versteifungsrippe 57 umfassen. In der dargestellten beispielhaften Ausführungsform sind zwei Versteifungsrippen 57 ausgebildet. Durch die Ausbildung von Versteifungsrippen 57 kann zunächst die Biegesteifigkeit der Verriegelungseinrichtung 5 in Teilumfangsbereichen gezielt eingestellt werden, um somit ein gewünschtes Betätigungsmoment zum Lösen der Verriegelungseinrichtung 5 zu spezifizieren.

Der Kupplungskörper 1 kann zusätzlich zu der Einsteckhülse 3 mindestens eine weitere Anbindungseinrichtung 6 für fluidführende Einrichtungen umfassen, wobei im Kupplungskörper 1 mindestens eine Verbindungsleitung 32 zur Ausbildung einer fluidführenden Verbindung zwischen der Einsteckhülse 3 und der mindestens einen weiteren Anbindungseinrichtung 6 ausgebildet werden kann. In der dargestellten Ausführungsform ist die zweite Anbindungseinrichtung zur Anbindung einer Schlauchleitung an einem der Einsteckhülse 3 gegenüberliegenden Ende des Kupplungskörpers 1 ausgebildet und weist ein Zapfenprofil zum Aufschießen bzw. Aufpressen einer Schlauchleitung (nicht dargestellt) auf. Die Figuren 4A und 4B zeigen ein erfindungsgemäßes Schnellkupplungssystem für Fluidleitungen umfassend eine Schnellkupplung mit einer Einsteckhülse 3 sowie einem rohrförmigen Einsteckteil 2 mit mindestens einer ersten Verrastungseinrichtung 41.

## Patentansprüche

1. Schnellkupplung für Fluidleitungen mit einem Kupplungskörper (1);
wobei der Kupplungskörper (1) eine Einsteckhülse (3) mit einem zylindrischen Aufnahmeraum (30) umfasst zur lösbaren Anbindung des Kupplungskörpers (1) an ein rohrförmiges Einsteckteil (2) mit mindestens einer ersten Verrastungseinrichtung (41);
wobei sich der zylindrische Aufnahmeraum (30) in axialer Richtung der Einsteckhülse (3) von einer Einstecköffnung (31) zu einem Aufnahmeraumgrund (33) erstreckt;
wobei die Einsteckhülse (3) eine Materialaussparung umfasst, welche sich um einen Umfangsabschnitt der zylindrischen Einsteckhülse (3) erstreckt zur Ausbildung eines Anordnungsraums (34), der sich von einem Anbindungsende (34a) zu einem oberen Ende (34b) erstreckt;
wobei eine Verriegelungseinrichtung (5) sich bogenförmig entlang eines Umfangsabschnitts der Einsteckhülse (3) in dem Anordnungsraum (34) erstreckend und einteilig mit der Einsteckhülse (3) ausgebildet ist und mindestens eine an die mindestens eine erste Verrastungseinrichtung (41) des Einsteckteils (2) angepasste zweite Verrastungseinrichtung (42) umfasst; und
wobei die Verriegelungseinrichtung (5) von einer unausgelenkten Verriegelungsposition, in welcher die mindestens eine zweite Verrastungseinrichtung (42) mit der mindestens einen ersten Verrastungseinrichtung (41) des Einsteckteils (3) zusammenwirkt und das Einsteckteil (2) gegenüber der Einsteckhülse (3) zumindest in axialer Richtung festlegt, durch Auslenken der Verriegelungseinrichtung (5) in axialer und radialer Richtung in eine Freigabeposition überführbar ist, in welcher die mindestens eine zweite Verrastungseinrichtung (42) die mindestens eine erste Verrastungseinrichtung (41) freigibt und das Einsteckteil (2) aus der Einsteckhülse (3) entfernbar ist.

2. Schnellkupplung nach Anspruch 1, wobei die Verriegelungseinrichtung (5) als Verriegelungsarm ausgebildet ist, wobei sich der Verriegelungsarm von dem ersten Anbindungsende (34a) bogenförmig entlang des Aufnahmeraums (34) zu einem zweiten freien Ende (34b) erstreckt, wobei das erste Anbindungsende (34a) in Umfangsrichtung an der Einsteckhülse (3) angeformt ist.

3. Schnellkupplung nach Anspruch 1 oder 2, wobei die Verriegelungseinrichtung (5) in axialer Richtung in Richtung der Einstecköffnung (31) beabstandet zu der Einsteckhülse (3) ausgebildet ist zur Ausbildung eines ersten axialen Spaltes (341).

4. Schnellkupplung nach Anspruch 3, wobei die Einsteckhülse (3) im Bereich des oberen Endes (34b) eine erste Materialausklinkung (3411) entlang eines ersten Umfangsabschnitts zur Erweiterung des ersten Spaltes (341) in axialer Richtung umfasst und die Verriegelungseinrichtung (5) einen in der unausgelenkten Verriegelungsposition in die erste Materialausklinkung (3411) axial vorstehenden ersten Vorsprung (51) umfasst, zur Ausbildung eines ersten Anschlagelementes, welches die radiale Auslenkung der Verriegelungseinrichtung (5) in der unausgelenkten Verriegelungsposition begrenzt.

5. Schnellkupplung nach einem der vorausgehenden Ansprüche, wobei die Verriegelungseinrichtung (5) in axialer Richtung in Richtung des Aufnahmeraumgrundes (33) beabstandet zu der Einsteckhülse (3) ausgebildet ist zur Ausbildung eines zweiten axialen Spaltes (342).

6. Schnellkupplung nach Anspruch 5, wobei die Einsteckhülse (3) im Bereich des zweiten Spaltes (342) eine zweite Materialausklinkung (3421) entlang eines zweiten Umfangsabschnitts zur Erweiterung des zweiten Spaltes (342) in axialer Richtung umfasst und die Verriegelungseinrichtung (5) einen in der Freigabeposition in die zweite Materialausklinkung (3421) vorstehenden zweiten Vorsprung (52) umfasst, zur Ausbildung eines zweiten Anschlagelementes, welches die radiale Auslenkung der Verriegelungseinrichtung (5) in der ausgelenkten Freigabeposition begrenzt.

7. Schnellkupplung nach einem der vorausgehenden Ansprüche, wobei die Verriegelungseinrichtung (5) mindestens eine zweite Verrastungseinrichtung (42) umfasst, welche in der unausgelenkten Verriegelungsposition in den zylindrischen Aufnahmeraum (30) ragt, wobei die mindestens eine zweite Verrastungseinrichtung (42) eine abgeschrägte, mit der mindestens einen ersten Verrastungseinrichtung (41) des Einsteckteils (2) zusammenwirkende, Anstoßfläche umfasst.

8. Schnellkupplung nach einem der vorausgehenden Ansprüche, wobei die Verriegelungseinrichtung (5) zwei in Umfangsrichtung beabstandete und in radialer Richtung der Einsteckhülse (3) dem Aufnahmeraum (30) abgewandte Betätigungselemente (55) umfasst.

9. Schnellkupplung nach Anspruch 8, wobei ein erstes Betätigungselement (551) im Bereich des Anbindungsendes (34a) ausgebildet ist und eine Betätigungsfläche (5511) umfasst, welche in axialer Richtung verläuft und wobei ein zweites Betätigungselement (552) in Richtung des freien Endes (34b) der Verriegelungseinrichtung (5) beanstandet zu dem ersten Betätigungselement (551) angeordnet ist und wobei das zweite Betätigungselement (552) eine in axialer Richtung geneigte Betätigungsfläche (5521) aufweist.

10. Schnellkupplung nach einem der vorausgehenden Ansprüche, wobei in dem Aufnahmeraum (30) zwischen dem Aufnahmeraumgrund (33) und der Verriegelungseinrichtung (5) ein Dichtungselement (7) angeordnet ist, wobei bevorzugt im Bereich der Einsteckhülse (3) mindestens eine Materialaussparung (36) zur Aufnahme eines Vorsprungs des Dichtungselements (7) ausgebildet ist.

11. Schnellkupplung nach einem der vorausgehenden Ansprüche, wobei die Verriegelungseinrichtung (5) mindestens eine entlang eines Teilabschnitts in Umfangsrichtung verlaufende Versteifungsrippe (57) umfasst.

12. Schnellkupplung nach einem der vorausgehenden Ansprüche, wobei der Kupplungskörper (1) eine Detektionseinrichtung (9) umfasst, welche zwischen der Verriegelungseinrichtung (5) und der Einsteckhülse (3) angeformt ist und derart ausgebildet ist, dass die Detektionseinrichtung (9) bei dem Auslenken der Verriegelungseinrichtung (5) von der unausgelenkten Verriegelungsposition in die ausgelenkte Freigabeposition bricht und/oder von der Verriegelungseinrichtung (5) oder der Einsteckhülse (3) abbricht.

13. Schnellkupplung nach einem der vorausgehenden Ansprüche, wobei der Kupplungskörper (1) zusätzlich zu der Einsteckhülse (3) mindestens eine weitere Anbindungseinrichtung (6) für fluidführende Einrichtungen umfasst, wobei im Kupplungskörper (1) mindestens eine Verbindungsleitung (32) zur Ausbildung einer fluidführenden Verbindung zwischen der Einsteckhülse (3) und der mindestens einen weiteren Anbindungseinrichtung (6) ausgebildet ist.

14. Schnellkupplung nach Anspruch 13, wobei der Kupplungskörper (1) weiterhin ein Rückschlagventil umfasst, wobei das Rückschlagventil in einer Verbindungsleitung (32) angeordnet werden kann.

15. Schnellkupplungssystem für Fluidleitungen umfassend:
eine Schnellkupplung nach einem der Ansprüche 1 bis 14 und
ein rohrförmiges Einsteckteil (2) mit mindestens einer ersten Verrastungseinrichtung (41).

16. Verwendung einer Schnellkupplung nach einem der Ansprüche 1 bis 14 oder eines Schnellkupplungssystems gemäß Anspruch 15 für eine Fluidleitung eines Motors eines Kraftfahrzeuges, insbesondere für eine Entlüftungsleitung.
